# EUROPEAN PATENT APPLICATION

(11) **EP 4 765 256 A1**
(43) Date of publication of application: **24.06.2026**
(21) Application number: 25222583.4
(22) Date of filing: 11.12.2025
(51) Int. Cl.: H01M 4/70, H01M 10/04, H01M 50/107, H01M 50/213, H01M 50/528, H01M 50/536, H01M 50/538

(54) **BATTERY CELL, BATTERY PACK, AND ELECTRONIC DEVICE**

(30) Priority: 18.12.2024 CN 202423125257 U
(71) Applicant: AESC Japan Ltd., Yokohama-shi, Kanagawa 220-0012 (JP)
(72) Inventor: ZHANG, Wenjing, Jiangyin City, Wuxi City, 214443 (CN)
(74) Representative: Becker, Eberhard

(57) **Abstract**

A battery cell (100), a battery pack (700), and an electronic device (800) are provided. The battery cell (100) includes a housing (1), an electrode assembly (2), and a current collecting plate (3). A first extension portion (31) of the current collecting plate (3) extends from a main body portion (30) along a radial direction of the main body portion (30) to be in contact with an outer tab (21). A second extension portion (32) is connected to the main body portion (30) between the two adjacent first extension portions (31). The second extension portion (32) is formed with an outer edge surface along a circumferential direction. The outer edge surface is projected orthographically onto a plane where the outer tab (21) is located to form an outer edge surface projection (9032) at least partially overlapping each outer tab (21) between the two adjacent first extension portions (31).

## Description

### BACKGROUND

### Technical Field

The disclosure relates to a field of a battery, and more particularly, to a battery cell, a battery pack, and an electronic device.

### Description of Related Art

In recent years, with rapid development of electric vehicles, consumer electronics, and new energy storage systems, for the electric vehicles, battery technology has become an important factor in the development thereof.

In the development of the battery technology, how to improve assembly efficiency of batteries is a technical issue that is required to be solved urgently.

### SUMMARY

The disclosure aims to provide a battery cell, which may solve an issue that when an electrode assembly is placed into a housing, an outer tab of the electrode assembly may be bent toward an outside of the electrode assembly due to force received in process steps.

A first aspect of the disclosure provides a battery cell, including a housing, an electrode assembly, and a current collecting plate. The housing includes a cylindrical side wall, one end of the side wall includes an opening, and the side wall is formed with a rolling groove recessed toward an inside of the housing at a position near the opening. The electrode assembly is accommodated in the housing, and the rolling groove limits movement of the electrode assembly along a height direction of the battery cell in the housing. The electrode assembly has a tab at one end near the rolling groove along the height direction, and the tab bent toward a center hole of the electrode assembly and closest to an outer edge of the electrode assembly constitutes an outer tab of the electrode assembly. The current collecting plate includes a main body portion, multiple first extension portions, and multiple second extension portions. The main body portion is disposed between the rolling groove and the electrode assembly, and a side surface of the main body portion is conductively connected to the tab. The first extension portion and the main body portion are located on a same plane, and the first extension portion extends outward from an outer edge of the main body portion along a radial direction of the main body portion to be in contact with the outer tab. One end of the second extension portion is connected to the main body portion between the two adjacent first extension portions, and the other end is conductively connected to the rolling groove. An outer edge of the second extension portion is formed with an outer edge surface along a circumferential direction. The outer edge surface is projected orthographically along a height direction of the electrode assembly onto a plane where the outer tab is located that is perpendicular to the height direction to form an outer edge surface projection, and the outer edge surface projection at least partially overlaps each of the outer tabs between the two adjacent first extension portions.

In the battery cell of an optional technical solution of the disclosure, the second extension portion includes a rolling groove fixing portion and a bridging portion. Two ends of the bridging portion are respectively connected to the outer edge of the main body portion and the rolling groove fixing portion. The rolling groove fixing portion is welded and fixed to a surface of the rolling groove away from the electrode assembly. The bridging portion is bent in a manner of having stress deformation toward the rolling groove, or the tabs are cut-and-stacked tabs.

In the battery cell of the optional technical solution of the disclosure, the stress deformation is elastic deformation, and when fixation between the second extension portion and the rolling groove is released, an end of the bridging portion close to the rolling groove elastically recovers by deforming toward a direction away from the electrode assembly.

In the battery cell of the optional technical solution of the disclosure, the second extension portion is conductively connected to the rolling groove by welding, and each of the rolling groove fixing portions is welded and fixed to the rolling groove by using multiple weld marks spaced apart from each other.

In the battery cell of the optional technical solution of the disclosure, the weld mark is a straight weld mark extending along the circumferential direction.

In the battery cell of the optional technical solution of the disclosure, a length L of each of the weld marks satisfies: 2 mm≤L≤(W-(n+1))/n mm, where W is a maximum circumferential length of each of the rolling groove fixing portions, units of L and W are both mm, and n is a number of the weld marks on each of the rolling groove fixing portions. Preferably, n=2, and a value range of W is 14 mm to 18 mm.

In the battery cell of the optional technical solution of the disclosure, the current collecting plate has the four first extension portions evenly distributed along the circumferential direction and the four second extension portions evenly distributed along the circumferential direction, and the first extension portions and the second extension portions are sequentially disposed at intervals. A gap is reserved at an outer peripheral edge of the main body portion for each of the first extension portions and each of the second extension portions.

In the battery cell of the optional technical solution of the disclosure, the battery cell further includes a cover plate, and the cover plate is used to seal the opening of the housing. The other end of the side wall includes an end wall. The end wall is provided with an installation hole, and the installation hole is used to install a terminal post. An insulating member is disposed between the terminal post and the end wall, and the insulating member is used to electrically insulate the end wall and the terminal post. A diameter d of a cylindrical battery and a depth D of the rolling groove satisfy a mathematical relationship: 12≤d/D≤23. Preferably, the depth D of the rolling groove satisfies: D≤4 mm.

A second aspect of the disclosure provides a battery pack, including the battery cell provided in the first aspect of the disclosure.

A third aspect of the disclosure provides an electronic device, including the battery pack provided in the second aspect of the disclosure.

### BRIEF DESCRIPTION OF THE DRAWINGS

FIG. 1 shows a schematic structural view of an electrode assembly in this embodiment.
FIG. 2 shows a schematic structural view of a negative tab in this embodiment.
FIG. 3 shows a schematic perspective view of a first current collecting plate in this embodiment.
FIG. 4 shows a schematic top view of the first current collecting plate in this embodiment.
FIG. 5 shows a schematic view of a projection of the first current collecting plate along a Z direction on a plane where an outer tab is located after the first current collecting plate is welded to the negative tab in this embodiment.
FIG. 6 is a schematic view showing a state in which the electrode assembly with the first current collecting plate welded thereto is placed into a housing in this embodiment.
FIG. 7 is a schematic view showing a state of a welding connection process between the first current collecting plate and the housing in this embodiment.
FIG. 8 is a schematic view showing matching between a press-fitting tool and a rolling groove fixing portion in this embodiment.
FIG. 9 shows a schematic structural view of a battery cell in this embodiment.
FIG. 10 is a partial enlarged view of FIG. 9.
FIG. 11 shows a schematic top view of the battery cell after removing the cover plate in this embodiment.
FIG. 12 is a partial enlarged view of FIG. 11.
FIG. 13 shows a schematic view of a battery pack in this embodiment.
FIG. 14 shows a schematic view of an electronic device in this embodiment.
FIG. 15 shows a schematic partial structural view of a battery cell in this embodiment.

### DETAILED DESCRIPTION OF DISCLOSED EMBODIMENTS

It should be noted that structural features and advantages of a battery cell according to the disclosure will be described below by way of examples. However, it should be understood that all descriptions are given for purposes of illustration only and should not be construed as limiting the disclosure in any way.

In addition, for any single technical feature described or implied in the embodiments mentioned herein, or any single technical feature shown or implied in the drawings, the disclosure still allows for continued arbitrary combination or deletion between these technical features (or equivalents thereof) without any technical obstacles, thereby obtaining more other embodiments of the disclosure that may not be directly mentioned herein.

### <Overview>

In an existing battery cell, an electrode assembly thereof is formed by winding a positive pole sheet, a separator, and a negative pole sheet. At an end portion of the electrode assembly, a tab is disposed and shaped to be parallel to an end surface of the electrode assembly by shaping methods such as bending, and then welded to a main body portion of a current collecting plate. After welding is completed, the electrode assembly and the current collecting plate are installed in a housing together, and an extension portion of the current collecting plate is welded to an inner periphery of the housing.

However, during a process of placing the electrode assembly into the housing, an outer tab may be bent outward due to force received in process steps, causing a diameter of the electrode assembly to increase and affecting assembly accuracy. In addition, an operation of welding the extension portion of the current collecting plate to the inner periphery of the housing is difficult, which is prone to poor welding, thereby affecting overall performance and reliability of a battery.

Generally referring to the drawings, according to an exemplary embodiment, an electrode assembly 2, a first current collecting plate 3 connected to a negative tab 20 of the electrode assembly 2, a housing 1 accommodating the electrode assembly 2 and conductively connected to the first current collecting plate 3, and a battery cell 100 having the above components are shown. By improving a design of the first current collecting plate 3 and a combined structure of the first current collecting plate 3 and the housing 1, advantages such as easy assembly of the battery cell 100 and enhanced stability of a connection structure of the battery cell 100 are achieved.

### <Electrode assembly 2>

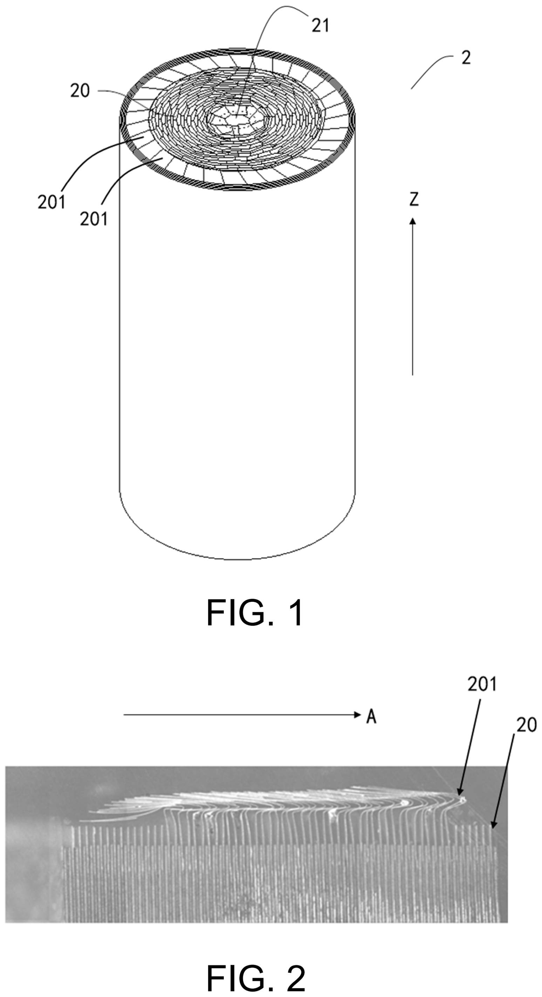

FIG. 1 shows a schematic structural view of the electrode assembly 2 in this embodiment. The electrode assembly 2 is formed by winding the positive pole sheet, the separator, and the negative pole sheet. The positive pole sheet includes a positive current collector and a positive active material layer. The positive current collector includes a coated area and an uncoated area. The positive active material layer is coated on the coated area of the positive current collector, and the uncoated area of the positive current collector forms a positive tab. The negative pole sheet includes a negative current collector and a negative active material layer. The negative current collector includes a coated area and an uncoated area. The negative active material layer is coated on the coated area of the negative current collector, and the uncoated area of the negative current collector forms the negative tab 20.

As a specific example, a material of the positive current collector may be aluminum. The positive active material layer includes a positive electrode active material, and the positive electrode active material may be lithium cobalt oxide, lithium iron phosphate, ternary lithium, lithium manganese oxide, etc. A material of the negative current collector may be copper. The negative active material layer includes a negative electrode active material, and the negative electrode active material may be carbon, silicon, etc. A material of the separator may be PP (polypropylene), PE (polyethylene), etc. In order to protect and insulate the electrode assembly 2, an insulating film may be coated on an outside thereof. The insulating film may be synthesized by PP, PE, PET, PVC, or other high molecular polymer materials.

Continuing to refer to FIG. 1, multiple negative tabs 20 are shown in a bent and stacked state. To form the negative tab 20 as shown in FIG. 1, various methods may be used. For example, one of the specific implementation methods is to cut and stack the uncoated area of the negative current collector to divide it into multiple tabs, and then flatten it from a height direction of the electrode assembly such that the negative tab 20 is parallel to the end surface of the electrode assembly 2, thereby facilitating welding to the first current collecting plate 3 to be introduced later. Although a state of the positive tab is not shown in FIG. 1, it may be understood that the positive tab may have a similar state to that of the negative tab 20, and details thereof will not be repeated here.

Among the negative tabs 20, the negative tab 20 that is bent toward a center hole 21 of the electrode assembly 2 and closest to an outer edge of the electrode assembly 2 constitutes an outer tab 201 of the electrode assembly 2. It should be noted here that the outer tab 201 refers to the negative tab 20 with an outermost bent edge, and is not necessarily the outermost negative tab 20. This is because, in some embodiments, as shown in FIG. 2 (a direction A is a direction away from the center hole 21), the outermost negative tab 20 is not bent, and the negative tab 20 is not the outer tab 201 described herein.

### <First current collecting plate 3>

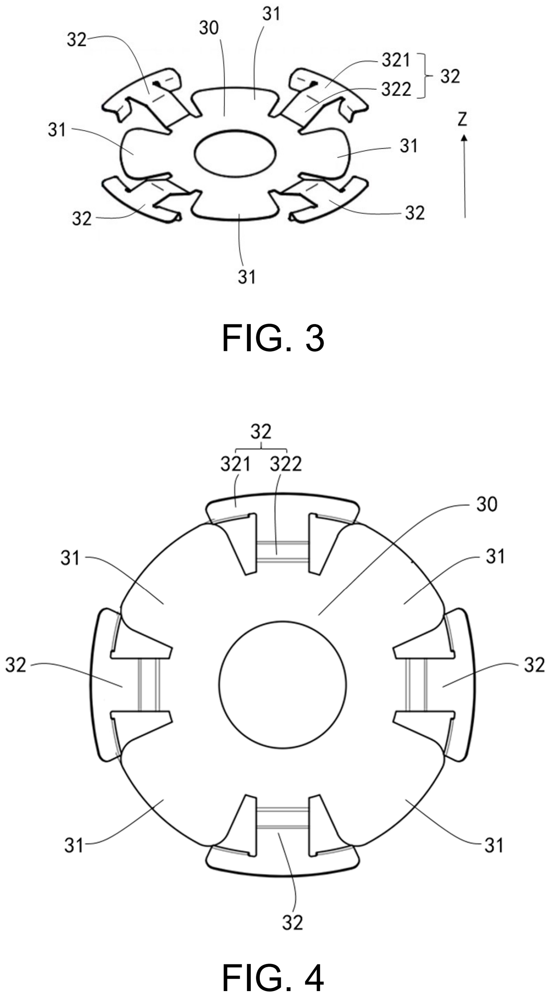

FIG. 3 shows a schematic perspective view of the first current collecting plate 3 in this embodiment. FIG. 4 shows a schematic top view of the first current collecting plate 3 in this embodiment. Although the first current collecting plate 3 in FIG. 4 does not show the opening shown in FIG. 3, it may be understood that the first current collecting plate 3 in FIG. 4 may actually have the similar opening, which is just not shown in the figure.

As shown in FIG. 3, the first current collecting plate 3 includes a main body portion 30, multiple first extension portions 31, and multiple extension portions 32. The main body portion 30 is annular in shape, and the four first extension portions 31 are located on the same plane as the main body portion 30. The first extension portion 31 extends outward from an outer edge of the main body portion 30 along a radial direction of the main body portion 30 to form a petal-like shape. Here, the first extension portion 31 and the main body portion 30 being located on the same plane means that the first extension portion 31 and the main body portion 30 are both mainly conductively connected to the negative tab 20 of the electrode assembly 2, and since the negative tab 20 is substantially located on the same plane, the first extension portion 31 and the main body portion 30 are also substantially located on the same plane. It should be noted that the same plane here includes the same plane or approximately the same plane. Because after the battery cell undergoes formation and charging and discharging, the first extension portion 31 and the main body portion 30 may undergo some deformation, but at this time they are also close to being on the same plane, or approximately on the same plane. The second extension portion 32 includes a rolling groove fixing portion 321 and a bridging portion 322. One end of the rolling groove fixing portion 321 is connected to the main body portion 30 between the two adjacent first extension portions 31, and the other end is connected to the rolling groove fixing portion 321. The rolling groove fixing portion 321 is used for conductive connection with a rolling groove 101 of the housing 1, which will be described in detail later. However, it should be noted here that a plane where the rolling groove 101 of the housing 1 is located and a plane where the negative tab 20 is located are staggered in the height direction of the electrode assembly 2, i.e., a Z direction. Therefore, as shown in FIG. 3, the rolling groove fixing portion 321, the main body portion 30, and the first extension portion 31 are staggered in the Z direction, and the bridging portion 322 has a height in the Z direction.

As shown in FIG. 4, outer edges of the first extension portions 31 and the second extension portions 32 substantially achieve 360° circumferential coverage. Advantages of this configuration will be described in detail later.

It may be understood that a shape of the main body portion 30, a number and shape of the first extension portions 31, and a number and shape of the second extension portions 32 shown in the illustrated embodiment are merely examples and do not constitute a limitation to the disclosure. In other embodiments, the number of the first extension portions 31 and the second extension portions 32 may be 3 or 6.

### <Assembly process>

The following describes a process of connecting the first current collecting plate 3 to the electrode assembly 2 and the housing 1 respectively.

First, the first current collecting plate 3 is connected to the negative tab 20 by welding, so that the main body portion 30 and the first extension portion 31 of the first current collecting plate 3 are connected to the negative tab 20, and it is ensured that the first extension portion 31 is kept in contact with the outer tab 201. Next, the electrode assembly 2 with the first current collecting plate 3 welded thereto is placed into the housing 1, that is, a step of insertion into the housing is performed.

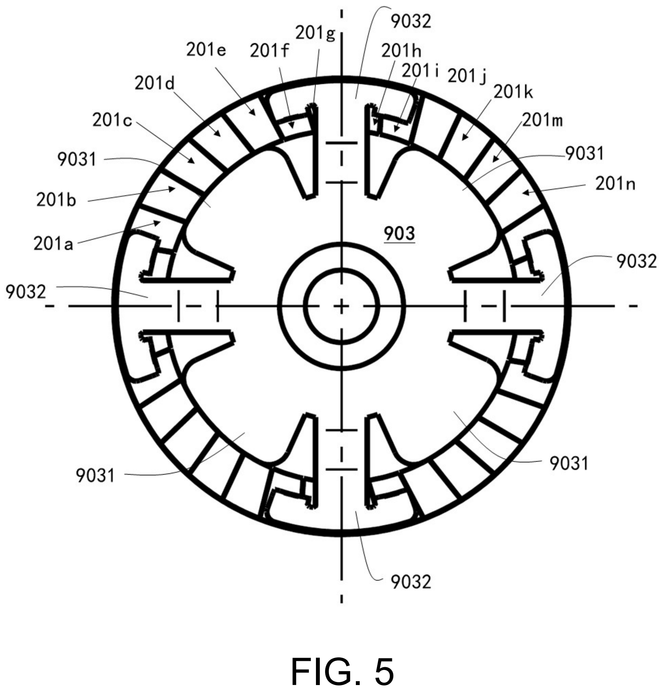

FIG. 5 shows a schematic view of a projection of the first current collecting plate 3 along the Z direction on a plane where the outer tab 201 is located after the first current collecting plate 3 is welded to the negative tab 20 in this embodiment.

As shown in FIG. 5, a gray portion is a first current collecting plate projection 903. Since the first extension portion 31 is parallel to the plane where the negative tab 20 is located, and the first extension portion 31 is connected to the negative tab 20, a shape of a first extension portion projection 9031 and the shape of the first extension portion 31 are substantially completely overlapped.

Referring to FIG. 5, taking the two first extension portion projections 9031 in an upper middle of FIG. 5 and an outer edge surface projection 9032 between the two first extension portion projections 9031 as an example, the first extension portion projection 9031 and at least some of outer tabs 201a, 201b, 201c, 201d, and 201e (each of the outer tabs 201a, 201b, 201c, 201d, and 201e corresponds to one tab respectively) on the left side are overlapped, and the first extension portion projection 9031 and at least some of outer tabs 201j, 201k, 201m, and 201n on the right side are overlapped. Each of outer tabs 201f, 201g, 201h, and 201i between the two first extension portion projections 9031 (i.e., between the two first extension portions 31 corresponding to the two first extension portion projections 9031) at least partially overlaps the outer edge surface projection 9032 of the second extension portion 32.

In the above text, the first extension portion projection 9031 and at least some of the outer tabs 201a, 201b, 201c, 201d, and 201e on the left side are overlapped, indicating that the first extension portion 31 corresponding to the first extension portion projection 9031 is in contact with the outer tabs 201a, 201b, 201c, 201d, and 201e, thereby preventing the outer tabs 201a, 201b, 201c, 201d, and 201e from bending outward due to an influence of process steps (such as airflow) during a process of insertion into the housing. Similarly, the first extension portion projection 9031 and at least some of the outer tabs 201j, 201k, 201m, and 201n on the right side are overlapped, indicating that the first extension portion 31 corresponding to the first extension portion projection 9031 is in contact with the outer tabs 201j, 201k, 201m, and 201n, thereby preventing the outer tabs 201j, 201k, 201m, and 201n from bending outward. The outer edge surface projection 9032 of the second extension portion 32 between the two first extension portion projections 9031 at least partially overlaps each of the outer tabs 201f, 201g, 201h, and 201i, indicating that an outer edge surface of the second extension portion 32 corresponding to the outer edge surface projection 9032 may prevent the outer tabs 201f, 201g, 201h, and 201i from bending outward during the process of insertion into the housing, thereby avoiding affecting the diameter of the electrode assembly 2.

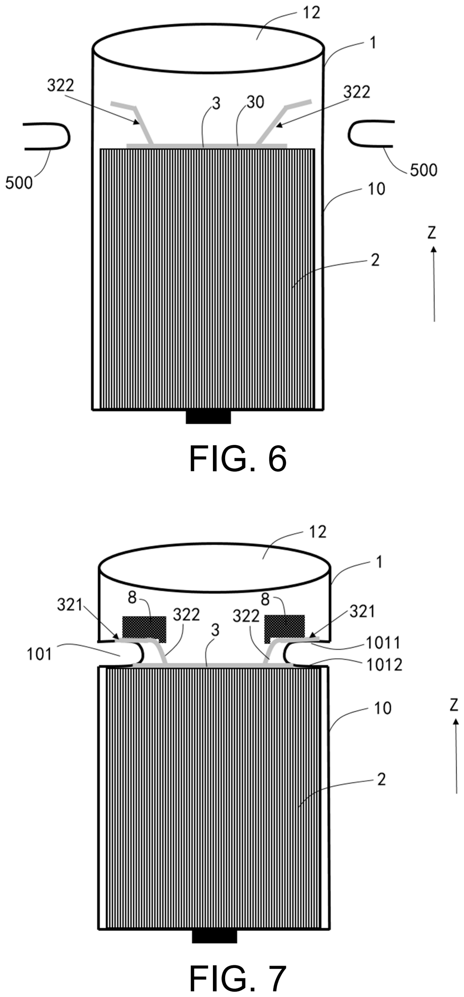

FIG. 6 is a schematic view showing a state in which the electrode assembly 2 with the first current collecting plate 3 welded thereto is placed into the housing 1 in this embodiment. As shown in FIG. 6, a free end of the bridging portion 322 (i.e., an end away from the main body portion 30) is tilted upward in the Z direction, thereby avoiding a rolling cutter 500 used for machining the rolling groove 101, so as to avoid interference from the first current collecting plate 3 during a process of machining the rolling groove 101.

FIG. 7 is a schematic view showing a state of a welding connection process between the first current collecting plate 3 and the housing 1 in this embodiment. Referring to FIG. 7, after the electrode assembly 2 with the first current collecting plate 3 welded thereto is placed into the housing 1, the rolling groove 101 recessed toward an inside of the housing 1 may be formed on a side wall 10 of the housing 1 near an opening 12 using a tool such as the rolling cutter 500. The rolling groove 101 has a first wall 1011 and a second wall 1012 spaced apart in the Z direction. The second wall 1012 may limit movement of the electrode assembly 2 along the Z direction in the housing 1. The free end of the bridging portion 322 is connected to the rolling groove fixing portion 321. For a purpose of avoiding the rolling cutter 500 as described above, in the absence of external force, the rolling groove fixing portion 321 is tilted upward, thereby maintaining a certain distance from the first wall 1011. To weld the rolling groove fixing portion 321 to the first wall 1011, a press-fitting tool 8 may be used. The press-fitting tool 8 applies the external force to the second extension portion 32, so that the bridging portion 322 is bent, and the rolling groove fixing portion 321 is bonded to the first wall 1011.

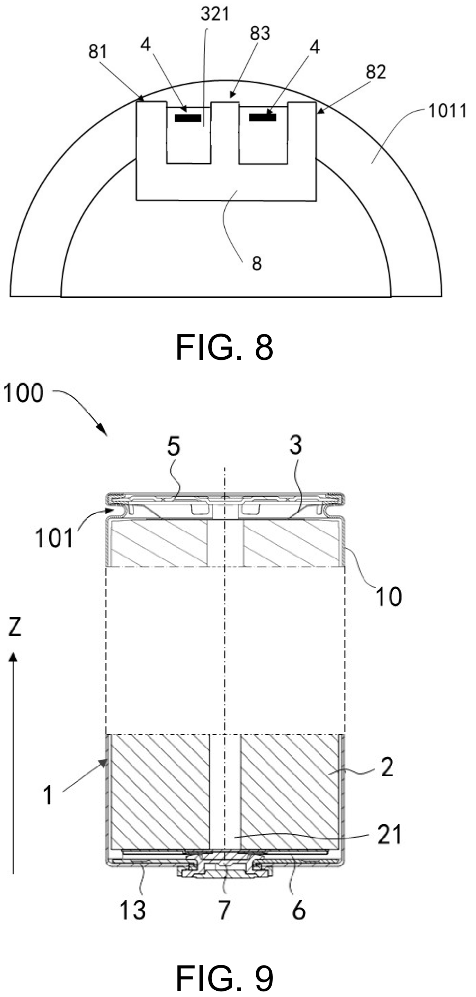

FIG. 8 is a schematic view showing matching between the press-fitting tool 8 and the rolling groove fixing portion 321 in this embodiment. Referring to FIG. 8, the press-fitting tool 8 includes a first pressing member 81, a second pressing member 82, and a third pressing member 83. The first pressing member 81 and the second pressing member 82 are respectively pressed on two ends of the rolling groove fixing portion 321, and the third pressing member 83 is pressed on a middle position of the rolling groove fixing portion 321. In a state where the first pressing member 81, the second pressing member 82, and the third pressing member 83 are respectively pressed on the two ends and the middle position of the rolling groove fixing portion 321, welding of the rolling groove fixing portion 321 to the first wall 1011 is performed between the first pressing member 81 and the third pressing member 83 and between the second pressing member 82 and the third pressing member 83 to form two short straight weld marks 4.

According to the above welding method, by using the press-fitting tool 8 with the third pressing member 83, a welding method of adding one pressing point in a middle of the rolling groove fixing portion 321 and forming the two short straight weld marks 4 replaces a welding method of forming one longer arc weld mark in the related art. In this way, since a form of the short straight weld mark 4 is adopted for welding, the electrode assembly 2 is not required to be rotated during a welding process, thereby reducing a welding difficulty and improving welding stability. At the same time, this method may effectively avoid an issue of poor contact caused by possibility of a bursting point in a middle position of the weld mark when the longer arc weld mark is formed in the related art.

Then, the opening 12 of the housing 1 may be sealed using a cover plate 5 to obtain the battery cell 100 as shown in FIG. 9.

Although in the above text, welding is taken as an example to introduce a conductive connection method of the first current collecting plate 3, the negative tab 20, and the rolling groove 101, the disclosure is not limited thereto. As long as the conductive connection between the first current collecting plate 3, the negative tab 20, and the rolling groove 101 may be achieved, the specific conductive connection method is not particularly limited. It may be understood that the assembly process introduced above is only a preferred embodiment and does not constitute a limitation to the disclosure.

### < Battery cell 100>

FIG. 9 shows a schematic structural view of the battery cell 100 in this embodiment. As shown in FIG. 9, the battery cell 100 is, as a specific example, a cylindrical battery. The battery cell 100 includes the housing 1, the electrode assembly 2, a terminal post 7, the cover plate 5, the first current collecting plate 3, and a second current collecting plate 6. The housing 1 includes the cylindrical side wall 10 and an end wall 13 located at one end of the side wall 10. The electrode assembly 2 is accommodated in the housing 1. The terminal post 7 passes through an installation hole of the end wall 13 and is insulated from the end wall 13 by an insulating member. The cover plate 5 covers and seals the opening 12 at one end of the side wall 10 away from the end wall 13. The side wall 10 is formed with the rolling groove 101 that is recessed toward the inside of the housing 1 near the opening 12. The first current collecting plate 3 is connected to a negative end of the electrode assembly 2 and the housing 1 (the rolling groove 101) respectively, and the second current collecting plate 6 is connected to a positive end of the electrode assembly 2 and the terminal post 7 respectively.

A specific size of the housing 1 may be determined according to a specific size of electrode assembly 2, such as a specification with a diameter of 46 mm and a height of 80 mm, 95 mm, and 120 mm. A material of the housing 1 may be various, such as copper, iron, aluminum, steel, and aluminum alloy. In order to prevent the housing 1 from rusting during long-term use, a layer of rust-proof material, such as metal nickel, may be further plated on a surface of the housing 1.

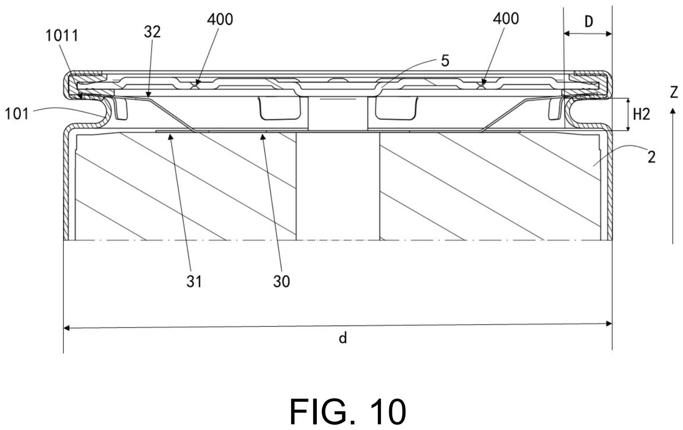

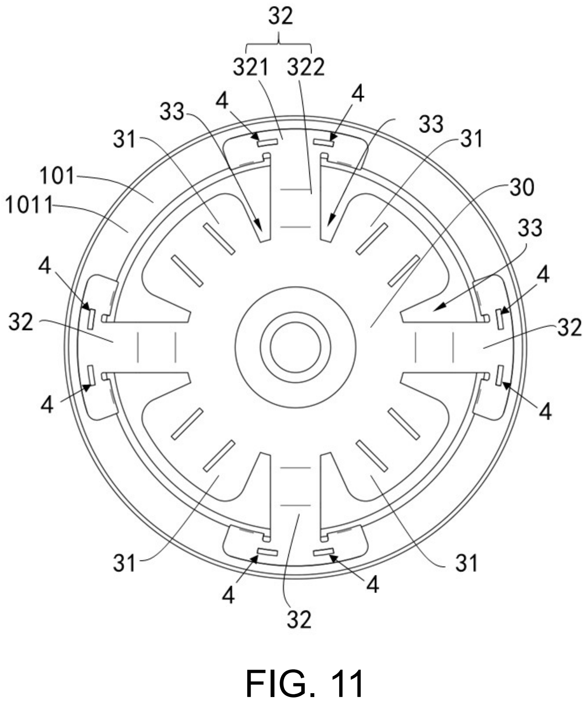

FIG. 10 is a partial enlarged view of FIG. 9. FIG. 11 shows a schematic top view of the battery cell 100 after removing the cover plate 5 in this embodiment.

Referring to FIG. 10, the main body portion 30 of the first current collecting plate 3 is located between the rolling groove 101 and the electrode assembly 2 in the Z direction, and a side surface of the main body portion 30 facing the electrode assembly 2 is conductively connected to the negative tab 20 (not shown in FIG. 9) of a negative electrode of the electrode assembly 2.

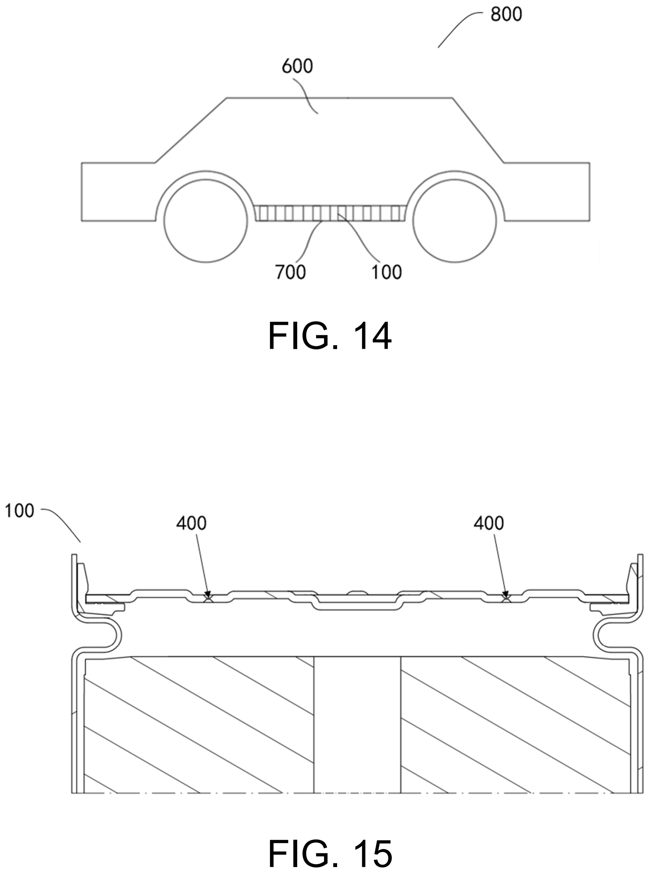

Referring to FIGs. 10 and 15, the battery cell 100 is the cylindrical battery. For the cylindrical battery, the electrode assembly 2 is placed into the housing 1 from a negative electrode side and sealed on the negative electrode side. The cylindrical battery is provided with an explosion-proof valve 400 on the negative electrode side to release pressure at the negative electrode. Therefore, the assembly process, assembly quality, and structure from placing the electrode assembly 2 into the housing 1 to sealing the housing 1 will affect an effect of pressure relief of the cylindrical battery. Main functions of the explosion-proof valve include pressure relief, explosion prevention, protection of a battery structure, and safety protection. When internal pressure of a lithium battery rises abnormally, the explosion-proof valve will automatically open to release gas accumulated inside, thereby reducing the pressure and preventing the battery from rupturing or exploding.

Referring to FIGs. 10 and 11, the first extension portion 31 and the main body portion 30 of the first current collecting plate 3 is located on the same plane, and the first extension portion 31 extends outward from the outer edge of the main body portion 30 along the radial direction of the main body portion 30. One end of the second extension portion 32 is connected to the main body portion 30 between the two adjacent first extension portions 31, and the other end is conductively connected to the first wall 1011 of the rolling groove 101. A rolling groove depth D of the rolling groove 101 satisfies: D≤4 mm. The depth D of the rolling groove 101 refers to a depth by which the rolling groove 101 is recessed relative to the side wall 10 of the housing 1, specifically a depth along a radial direction of the housing 1 as shown in FIG. 10.

Although in the illustrated embodiment, a cross-section of the rolling groove 101 is U-shaped, and the second extension portion 32 is fixed on the first wall 1011 of the rolling groove 101, the disclosure is not limited thereto. Any structure formed by the side wall 10 being recessed toward the inside of the housing 1 falls within a technical scope of the rolling groove 101 described in the disclosure. The second extension portion 32 may be fixed at any position on the rolling groove 101 that is suitable for conductive connection without any particular limitation. The depth D of the rolling groove 101 is generally small, which is, for example, less than or equal to 4 mm. However, in some other embodiments, the depth D may be greater than 4 mm.

FIG. 11 shows a schematic top view of the battery cell 100 after removing the cover plate 5 in this embodiment. At this time, the first current collecting plate 3 is conductively connected to both the negative tab 20 and the rolling groove 101. FIG. 5 shows the schematic view of the projection of the first current collecting plate 3 along the Z direction on the plane where the outer tab 201 is located when the first current collecting plate 3 is conductively connected to the negative tab 20 but not yet conductively connected to the rolling groove 101 in this embodiment. Although a position of the second extension portion 32 may be changed slightly before and after conductive connection to the rolling groove 101, the change is subtle. Therefore, reference may be made to FIG. 5 to understand the projection of the first current collecting plate 3 along the Z direction on the plane where the outer tab 201 is located in the battery cell 100 after leaving the factory.

Referring to FIGs. 11 and 5, the first extension portion 31 extends outward from the outer edge of the main body portion 30 along the radial direction of the main body portion 30 to be in contact with the outer tab 201. The outer edge of the second extension portion 32 is formed with the outer edge surface along a circumferential direction. The outer edge surface is projected orthographically onto the plane where the outer tab 201 is located (the plane is substantially perpendicular to the Z direction) along the height direction of the electrode assembly 2 to form the outer edge surface projection 9032. The outer edge surface projection 9032 at least partially overlaps each of the outer tabs 201 between the two adjacent first extension portions 31. Specifically, the outer edge surface may be formed by a plane where the rolling groove fixing portion 321 is located, or by a plane where the rolling groove fixing portion 321 and circumferential extension portions thereof are located.

By contacting the outer tab 201 with the first extension portion 31, the first extension portion 31 may effectively press the corresponding outer tab 201 to prevent it from bending outward during the process of insertion into the housing. At the same time, the contact between the first extension portion 31 and the outer tab 201 also helps to reduce internal resistance. For the second extension portion 32, since the outer edge surface projection 9032 thereof at least partially overlaps the outer tab 201, when the electrode assembly 2 is welded to the first current collecting plate 3 and placed into the housing 1, a degree of outward bending of the corresponding outer tab 201 (i.e., a degree of deviation from the Z direction in a direction away from the central hole 21) may be limited to prevent the outer tab 201 from bending outward to the outside of the electrode assembly 2. Furthermore, since the second extension portion 32 does not apply the pressure on the outer tab 201, it is beneficial for smooth pressure relief when thermal runaway occurs in a cell, especially for the cylindrical battery in which the pressure relief is at the negative electrode. In addition, the outer edge surface projection 9032 of the second extension portion 32 at least partially overlaps each of the outer tabs 201 between the two adjacent first extension portions 31, which ensures that each of the outer tabs 201 is directly contacted by the first extension portion 31 or is limited to the degree of outward bending thereof by the second extension portion 32 during the process of insertion into the housing, thereby preventing the diameter of the electrode assembly 2 from increasing. By disposing the first extension portions 31 and the second extension portions 32, not only may the above effect of preventing outward bending be achieved, but also an overall weight of the first current collecting plate 3 may be reduced while ensuring functionality. It should be noted here that the outer tab 201 corresponding to the second extension portion 32 may have a certain degree of outward bending, but when the degree of outward bending thereof is large, it will be limited by the second extension portion 32, thereby preventing it from further bending outward to the outside of the electrode assembly 2 and affecting the diameter of the electrode assembly 2. The outer tab 201 being bent outward to the outside of the electrode assembly 2 means that a projection of an end point of the outer tab 201 away from the electrode assembly 2 on a plane perpendicular to the Z direction exceeds beyond a range where the end surface of the electrode assembly 2 is located.

In some embodiments, referring to FIG. 11, the second extension portion 32 includes the rolling groove fixing portion 321 and the bridging portion 322. Two ends of the bridging portion 322 are respectively connected to the outer edge of the main body portion 30 and the rolling groove fixing portion 321, and the rolling groove fixing portion 321 is welded and fixed to a side of the rolling groove 101 away from the electrode assembly 2. Since the rolling groove fixing portion 321 is welded and fixed to the side of the rolling groove 101 away from the electrode assembly 2, stress of the bridging portion 322 connected to the rolling groove fixing portion 321 toward the rolling groove 101 is more appropriate, so that the rolling groove fixing portion 321 and the rolling groove 101 have a better bonding degree, which is conducive to improving operability of welding and improving welding quality. Preferably, the bridging portion 322 is spaced apart from the first extension portions 31 on two adjacent sides, which is conducive to reducing the overall weight of the first current collecting plate 3 and facilitating the smooth pressure relief in case of the thermal runaway. Although the bridging portion 322 has a uniform width in the illustrated embodiment, in other embodiments, the bridging portion 322 may also have bent side portions.

In some embodiments, the bridging portion 322 is bent in a manner of having stress deformation toward the rolling groove 101. The stress deformation is elastic deformation. When the fixation between the second extension portion 32 and the rolling groove 101 is released, an end of the bridging portion 322 close to the rolling groove 101 elastically recovers by deforming toward a direction away from the electrode assembly 2. Referring to FIG. 6 and the above description of the assembly process, after the electrode assembly 2 with the first current collecting plate 3 welded thereto is placed into the housing 1, the free end of the bridging portion 322 is higher in the Z direction than a position on the side wall 10 used to form the rolling groove 101, thereby preventing interference between a fixture (e.g., the rolling cutter 500) used to process the rolling groove 101 and the first current collecting plate 3. Therefore, when the bridging portion 322 is not subjected to the external force, the free end thereof and the rolling groove 101 are staggered in the Z direction, and bending with the external force is required to achieve conductive connection between the rolling groove fixing portion 321 and the rolling groove 101. That is, the bridging portion 322 is bent in the manner of having the stress deformation toward the rolling groove 101, so that the rolling groove fixing portion 321 connected to the free end of the bridging portion 322 is conductively connected to the rolling groove 101. Since the bridging portion 322 is bent in the manner of having the stress deformation toward the rolling groove 101, after the fixation between the second extension portion 32 and the rolling groove 101 is released, for example, after the bridging portion 322 conductively connected to the rolling groove 101 is cut off, the bridging portion 322 elastically recovers toward the direction away from the electrode assembly 2 in the Z direction.

In some embodiments, a height of the outer tab 201 in a freely extended state is H1, and H1 may also be defined as a distance from an edge of the negative current collector to an edge of the active material layer in the electrode assembly 2. As shown in FIG. 10, in a state where the assembly is completed, a distance from the first extension portion 31 to the second extension portion 32 is H2, and a value range of H1/H2 is 1.1 to 2. The height H1 of the outer tab 201 is slightly greater than H2. The value range may effectively prevent the outer tab 201 from bending outward, and ensure that the second extension portion 32 does not apply the pressure on the outer tab 201 when the assembly is completed, thereby facilitating the smooth pressure relief in case of the thermal runaway.

In some embodiments, as shown in FIG. 10, a diameter d of the battery cell 100 in a form of the cylindrical battery and the depth D of the rolling groove 101 satisfy the following mathematical relationship: 12≤d/D≤23. The diameter d of the battery cell 100 refers to a maximum diameter of a cross-section of the cylindrical battery, which in some cases is an outer diameter of the housing 1. The depth D of the rolling groove 101 includes a thickness of the housing 1. In some embodiments, the depth D of the rolling groove 101 is less than or equal to 4 mm.

As shown in FIG. 11, each of the rolling groove fixing portions 321 is welded and fixed to the rolling groove 101 by using the weld marks 4 spaced apart from each other, and the weld mark 4 is the straight weld mark 4 extending along the circumferential direction. Referring to FIG. 8 and the description of the assembly process above, each of the rolling groove fixing portions 321 is welded and fixed to the rolling groove 101 through the spaced weld marks 4, which may effectively ensure an overcurrent area and avoid an issue of poor welding caused by the bursting point in the middle of the longer weld mark. Specifically, when one single weld mark is used, in order to ensure the overcurrent area, the weld mark is required to have a certain length. However, due to the following two reasons, the longer weld mark is prone to have the bursting spot in the middle position, resulting in poor contact: on the one hand, for the reasons described above, the second extension portion 32 is pressed on the rolling groove 101 due to the force, and has a certain elastic stress; on the other hand, a surface of the rolling groove 101 is not a complete plane, and it is difficult to be completely bonded to the rolling groove fixing portion 321. The spaced shorter weld marks 4 provided in this embodiment may effectively avoid the issues that may be caused by the longer weld marks.

In addition, since the depth D of the rolling groove 101 is small, a main continuous contact surface between the second extension portion 32 and the rolling groove 101 is located in the circumferential direction. Therefore, the straight weld mark 4 extending along the circumferential direction is disposed, which helps to improve the welding stability. At the same time, the use of the straight weld mark 4 also helps to simplify the welding process. Specifically, if arc welding is required to be performed, the electrode assembly 2 is required to be rotated in accordance with a welding speed, which makes operation more difficult. The straight weld mark 4 in this embodiment may avoid an issue of complicated operation of the arc weld mark.

Based on the above, by using the straight welding marks 4, not only the welding quality is guaranteed, but also production efficiency is significantly improved.

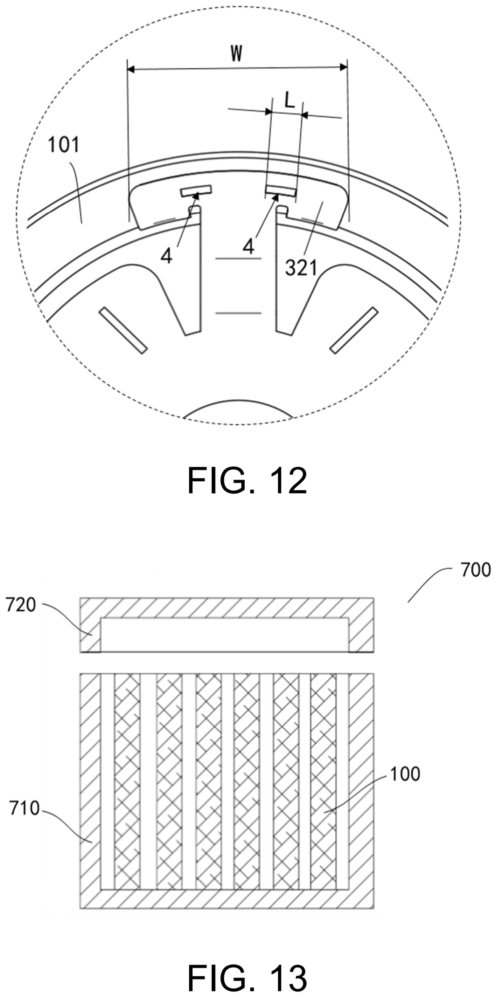

In some embodiments, referring to FIG. 12, each of the rolling groove fixing portions 321 is welded and fixed to the rolling groove 101 by using the weld marks 4 spaced apart from each other, and a length L of each of the weld marks 4 satisfies: 2 mm≤L≤(W-(n+1))/n mm, where W is a maximum circumferential length of each of the rolling groove fixing portions 321, that is, a distance between two most distant end points of the rolling groove fixing portion 321 in the circumferential direction, and n is a number of the weld marks 4 on each of the rolling groove fixing portions 321. When the length L of the weld mark 4 satisfies the above mathematical relationship, the length L of the weld mark 4 is not too short, thereby ensuring the overcurrent area, and at the same time, the length L of the weld mark 4 is not too long, thereby helping to avoid the occurrence of the bursting points and improve the welding quality.

Preferably, n=2, and a value range of W is 14 mm to 18 mm. When the number of the welding marks 4 on each of the rolling groove fixing portions 321 is two, the welding quality is better. When the number of the weld marks 4 on each of the rolling groove fixing portions 321 exceeds two, the welding efficiency may be reduced, and laser instability may occur due to a welding length being too short. When a value range of a maximum circumferential length W of each of the rolling groove fixing portions 321 is 14 mm to 18 mm, it is easier to operate when welding the weld marks 4.

In the battery cell of an optional technical solution of the disclosure, a maximum circumference of the battery cell is C, and a value range of C/W is 7 to 11. Considering convenience of welding, a welding area, and a shielding effect on the negative tab 20, C/W is preferably a value within a range of 7 to 11. For example, when a diameter of the housing 1 of the battery cell 100 is 46 mm, and C is 144.44 mm. According to the preferred range of C/W, W is preferably 14 mm, 15 mm, 16 mm, 17 mm, etc., for example.

In some embodiments, referring to FIG. 11, each of the rolling groove fixing portions 321 is welded and fixed to the rolling groove 101 by using the weld marks 4 spaced apart from each other. The current collecting plate has the four first extension portions 31 evenly distributed along the circumferential direction and the four second extension portions 32 evenly distributed along the circumferential direction. The first extension portions 31 and the second extension portions 32 are sequentially disposed at intervals, and a gap 33 is reserved at an outer peripheral edge of the main body portion 30 for each of the first extension portions 31 and each of the second extension portions 32. Through the above configuration, a current of the first extension portion 31 may be effectively transmitted through the second extension portion 32, forming a stable current path. In addition, by disposing the four first extension portions 31 evenly distributed along the circumferential direction and the four second extension portions 32 evenly distributed along the circumferential direction, angles between the two adjacent first extension portions 31 and the two adjacent second extension portions 32 may be 90°. This symmetry is advantageous in production. For example, since the second extension portions 32 are equidistantly distributed at angles, precise angle control may be achieved when the battery cell 100 is rotated to be welded to another second extension portion 32, which simplifies the welding process and improves consistency and stability of welding. In addition, the reserved gap 33 may release the elastic stress of the second extension portion 32 to prevent the first current collecting plate 3 from being damaged by tearing, and may also avoid interference with welding between the first extension portion 31 and the negative tab 20.

Through the above method, solutions in some embodiments of the disclosure may be effectively applied to the battery cell 100 of cylindrical batteries. The cylindrical batteries pursue an extreme energy density and have a large group margin (the group margin is a ratio of a maximum diameter of the electrode assembly 2 to a maximum inner diameter of the housing 1, and the group margin of the cylindrical batteries is generally 94% to 99%), resulting in a very low process window for assembling the electrode assembly 2 into the housing 1. By disposing the first current collecting plate 3 provided in some embodiments of the disclosure, assembly efficiency may be effectively improved, and an issue of poor assembly caused by the excessively large diameter of the electrode assembly 2 may be avoided.

### <Battery pack 700>

FIG. 13 shows a schematic view of a battery pack 700 in this embodiment. As shown in FIG. 13, the battery pack 700 includes a box body 710, a box cover 720, and multiple battery cells 100. The battery cells 100 are placed into the box body 710, and are connected in series or in parallel, or in a combination of series and parallel connections. The box cover 720 is sealed on the box body 710 to protect the battery cells 100. It should be noted that, in addition to the battery cell 100 of the disclosure, the battery pack 700 may also include a thermal management system, a circuit board, etc. of the battery pack 700. The battery pack 700 may be a battery module, and may also be a cell pack, an energy storage cabinet, etc., which will not be described in detail here.

### <Electronic device 800>

FIG. 14 shows a schematic view of an electronic device 800 in this embodiment. As shown in FIG. 14, the electronic device 800 includes the above battery pack 700 and a working portion 600 electrically connected to the battery pack 700. As an example, the electronic device 800 is a vehicle, and the vehicle may be a fuel vehicle, a gas vehicle, or a new energy vehicle. The new energy vehicle may be a battery electric vehicle, a hybrid electric vehicle, an extended range electric vehicle, but the disclosure is not limited thereto. The working portion 600 is a vehicle body, and the battery pack 700 is disposed at a bottom of the vehicle body and provides electrical energy support for driving of the vehicle or operation of electric elements in the vehicle. However, in some other embodiments, the electronic device 800 may further be a mobile phone, a portable device, a notebook computer, a ship, a spacecraft, an electric toy, an electric tool, etc. The spacecraft includes an aircraft, a rocket, a space shuttle, a space ship, etc. The working portion 600 may be a unit component that may obtain electrical energy of the battery pack 700 and perform corresponding work, such as a blade rotating unit of a fan, a dust-absorbing working unit of a vacuum cleaner, etc. The electric toy includes a fixed or mobile electric toy, such as a game console, an electric car toy, an electric ship toy, an electric aircraft toy, etc. The electric tool includes a metal cutting electric tool, a grinding electric tool, an assembly electric tool, a railway electric tool, such as an electric drill, an electric grinder, an electric wrench, an electric screwdriver, an electric hammer, an electric impact drill, a concrete vibrator, an electric planer, etc. The embodiment of the disclosure provides no special limitation to the electronic device 800.

## Claims

1. A battery cell (100), comprising:
a housing (1), wherein the housing (1) comprises a cylindrical side wall (10), one end of the side wall (10) comprises an opening (12), and the side wall (10) is formed with a rolling groove (101) recessed toward an inside of the housing (1) at a position near the opening (12);
an electrode assembly (2) accommodated in the housing (1), wherein the rolling groove (101) limits movement of the electrode assembly (2) along a height direction of the battery cell (100) in the housing (1), the electrode assembly (2) has a tab (20) at one end near the rolling groove (101) along the height direction, the tab (20) is bent toward a center hole (21) of the electrode assembly (2), and the tab (20) closest to an outer edge of the electrode assembly (2) constitutes an outer tab (21) of the electrode assembly (2); and
a current collecting plate (3) comprising a main body portion (30), a plurality of first extension portions (31), and a plurality of second extension portions (32), wherein the main body portion (30) is disposed between the rolling groove (101) and the electrode assembly (2), and a side surface of the main body portion (30) is conductively connected to the tab (20),
the first extension portion (31) and the main body portion (30) are located on a same plane, and the first extension portion (31) extends outward from an outer edge of the main body portion (30) along a radial direction of the main body portion (30) to be in contact with the outer tab (21),
one end of the second extension portion (32) is connected to the main body portion (30) between the two adjacent first extension portions (31), and another end of the second extension portion (32) is conductively connected to the rolling groove (101),
an outer edge of the second extension portion (32) is formed with an outer edge surface along a circumferential direction, the outer edge surface is projected orthographically along a height direction of the electrode assembly (2) onto a plane where the outer tab (21) is located that is perpendicular to the height direction to form an outer edge surface projection (9032), and the outer edge surface projection (9032) at least partially overlaps each of the outer tabs (21) between the two adjacent first extension portions (31).

2. The battery cell (100) according to claim 1, wherein the second extension portion (32) comprises a rolling groove fixing portion (321) and a bridging portion (322), two ends of the bridging portion (322) are respectively connected to the outer edge of the main body portion (30) and the rolling groove fixing portion (321), the rolling groove fixing portion (321) is welded and fixed to a surface of the rolling groove (101) away from the electrode assembly (2), and the bridging portion (322) is bent in a manner of having stress deformation toward the rolling groove (101), or
the tabs (20) are cut-and-stacked tabs.

3. The battery cell (100) according to claim 2, wherein the stress deformation is elastic deformation, and when fixation between the second extension portion (32) and the rolling groove (101) is released, an end of the bridging portion (322) close to the rolling groove (101) elastically recovers by deforming toward a direction away from the electrode assembly (2).

4. The battery cell (100) according to claim 2, wherein the second extension portion (32) is conductively connected to the rolling groove (101) by welding, and each of the rolling groove fixing portions (321) is welded and fixed to the rolling groove (101) by using a plurality of weld marks (4) spaced apart from each other.

5. The battery cell (100) according to claim 4, wherein the weld mark (4) is a straight weld mark extending along the circumferential direction, or
a length L of each of the weld marks (4) satisfies: 2 mm≤L≤(W-(n+1))/n mm, wherein W is a maximum circumferential length of each of the rolling groove fixing portions (321), units of L and W are both mm, and n is a number of the weld marks (4) on each of the rolling groove fixing portions (321).

6. The battery cell (100) according to claim 5, wherein n=2, or
a maximum circumference of the battery cell (100) is C, and a value range of C/W is 7 to 11.

7. The battery cell (100) according to claim 1, wherein the current collecting plate (3) has the four first extension portions (31) evenly distributed along the circumferential direction and the four second extension portions (32) evenly distributed along the circumferential direction, and the first extension portions (31) and the second extension portions (32) are sequentially disposed at intervals,
a gap (33) is reserved at an outer peripheral edge of the main body portion (30) for each of the first extension portions (31) and each of the second extension portions (32).

8. The battery cell (100) according to claim 1, further comprising a cover plate (5), wherein the cover plate (5) is used to seal the opening (12) of the housing (1), another end of the side wall (10) comprises an end wall (13), the end wall (13) is provided with an installation hole, the installation hole is used to install a terminal post (7), an insulating member is disposed between the terminal post (7) and the end wall (13), and the insulating member is used to electrically insulate the end wall (13) and the terminal post (7),
the battery cell (100) is a cylindrical battery, and a diameter d of the cylindrical battery and a depth D of the rolling groove (101) satisfy a mathematical relationship: 12≤d/D≤23;
the cover plate (5) comprises an explosion-proof valve (400), and the explosion-proof valve (400) is an annular notch on the cover plate (5), or
a height of the outer tab (21) is H1, a distance from the first extension portion (31) to the second extension portion (32) is H2, and a value range of H1/H2 is 1.1 to 2.

9. A battery pack (700), comprising the battery cell (100) according to any one of claims 1-8.

10. An electronic device (800), comprising the battery pack (700) according to claim 9.
